# DEMANDE DE BREVET EUROPEEN

(11) **EP 4 600 163 A1**
(43) Date de publication de la demande: **13.08.2025**
(21) Numéro de dépôt: 24305321.2
(22) Date de dépôt: 01.03.2024
(51) Int. Cl.: B65B 5/12, B65B 7/16, B65B 11/52, B65B 25/00, B65B 31/02, A23L 17/50, B65D 1/36, B65D 77/20, B65D 81/20, B65D 85/50

(54) **UNITÉ DE TRANSPORT DE COQUILLAGES, NOTAMMENT D'HUÎTRES**

(30) Priorité: 06.02.2024 FR 2401129
(71) Demandeur: Sanchez Guy Expedition, 34140 Meze (FR)
(72) Inventeur: SANCHEZ, Loïc, 34140 MEZE (FR)
(74) Mandataire: Regimbeau

(57) **Abrégé**

La présente invention concerne un procédé de conditionnement (P) de coquillages (2) et une unité de transport associée, le procédé comprenant les étapes suivantes :
- placer (E2) un coquillage dans chaque empreinte (6) formée dans un support (3) ;
- placer (E3) le support (3) comprenant les coquillages (2) dans une enceinte étanche ;
- réduire (E4) la pression dans l'enceinte jusqu'à atteindre une pression de conservation inférieure à la pression atmosphérique ;
- fixer (E5, E6) de manière étanche un couvercle (4) sur le support (3) de sorte à immobiliser le ou les coquillages (2) entre le couvercle (4) et le support (3) et à maintenir une pression dans l'au moins un empreinte (6) sensiblement égale à la pression de conservation.

## Description

### DOMAINE TECHNIQUE

L'invention se rapporte au conditionnement de coquillages vivants tels que des produits ostréicoles dans des emballages.

### ETAT DE LA TECHNIQUE

Dans le domaine ostréicole, il est connu d'utiliser des bourriches en bois, en contreplaqué bois ou en vannerie pour le conditionnement et le transport de coquillages vivants à vendre. Il existe toutefois certaines contraintes pour le conditionnement de produits ostréicoles. Après leur sortie de l'eau, les huîtres sont placées à plat dans l'espace intérieur d'une bourriche, de sorte à conserver leur eau au maximum et à préserver leurs qualités gustatives. La bourriche est ensuite refermée par un couvercle.

Une bourriche contenant des coquillages vivants peut ensuite être vendue à l'unité dans une surface de vente.

D'autres types d'emballages de coquillages vivants peuvent être utilisés. Par exemple, le document FR 3 066 180 décrit une assiette en polymère, dont une surface de réception de coquillages comporte plusieurs emplacements prédéfinis. Une huître peut être positionnée dans chaque emplacement. L'assiette est ensuite recouverte d'un film plastique microperforé et l'ensemble formé par l'assiette et les huîtres est placé à une température comprise entre 170°C et 190°C afin de thermorétracter le film sur les huîtres.

Toutefois, ce procédé implique de faire subir aux huîtres une température élevée. De plus, la durée de conservation des coquillages reste insuffisante car les emballages proposés ne permettent pas de maintenir les coquillages en vie suffisamment longtemps.

### EXPOSE DE L'INVENTION

Un but de la présente demande est de remédier aux inconvénients précités, en proposant un procédé de conditionnement qui permette d'augmenter encore la durée de vie des coquillages, et donc leur durée de conservation.

Il est à cet effet proposé, selon un premier aspect, un procédé de conditionnement de coquillages, tels que des huîtres, comprenant les étapes suivantes :
- fournir un support pour les coquillages, le support comprenant une face supérieure dans laquelle est formé au moins une empreinte configurée pour loger au moins partiellement un coquillage de sorte à maintenir le coquillage en position par rapport au support ;
- placer un coquillage dans chaque empreinte du support ;
- placer le support comprenant le ou les coquillages dans une enceinte étanche ;
- réduire la pression dans l'enceinte jusqu'à atteindre une pression de conservation inférieure à la pression atmosphérique ;
- fixer de manière étanche un couvercle sur le support de sorte à immobiliser le ou les coquillages entre le couvercle et le support et à maintenir une pression dans l'au moins un empreinte sensiblement égale à la pression de conservation.

Certaines caractéristiques préférées mais non limitatifs du procédé de conditionnement selon le premier aspect sont les suivants, prises individuellement ou en combinaison :
- la pression de conservation est comprise entre 100 mbar et 800 mbar, par exemple égale à 500 mbar ;
- l'étape de réduction de la pression est réalisée à une vitesse comprise entre 50 mbar/s et 500 mbar/s, par exemple 200 mbar/s ;
- l'étape de réduction de la pression est réalisée à température ambiante ;
- le couvercle comprend un film plastique déformable, et l'étape de fixation du couvercle sur le support comprend l'application du film au contact de l'au moins un coquillage ;
- l'étape de fixation du couvercle comprend la soudure du film sur le support ; et/ou
- le ou les coquillages comprennent un coquillage bivalve asymétrique comprenant une valve inférieure et une valve supérieure, la valve inférieure étant plus bombée que la valve supérieure, l'étape de placement du coquillage dans l'empreinte comprenant le placement de la valve inférieure au fond de l'empreinte.

Selon un deuxième aspect, il est proposé une unité de transport de coquillages comprenant :
- un support comprenant une face supérieure dans laquelle est formé au moins un empreinte, chaque empreinte étant configuré pour loger au moins partiellement un coquillage de sorte à maintenir le coquillage en position par rapport au support ;
- au moins un coquillage, chaque coquillage étant placé dans un empreinte correspondant ;
- un couvercle fixé de manière étanche sur le support, le couvercle étant en contact avec l'au moins un coquillage afin de maintenir l'au moins un coquillage en position par rapport au support ; une pression dans l'unité de transport étant inférieure à la pression atmosphérique.

Certaines caractéristiques préférées mais non limitatifs de l'unité de transport selon le premier aspect sont les suivants, prises individuellement ou en combinaison :
- l'au moins un coquillage comprend une huitre ;
- la pression dans l'unité de transport est comprise entre 400 mbar et 600 mbar, par exemple égale à 500 mbar ;
- le couvercle comprend un film plastique déformable appliqué au contact de l'au moins un coquillage, le film plastique étant soudé sur le support ;
- le ou les coquillages comprennent un coquillage bivalve asymétrique comprenant valve inférieure et une valve supérieure, la valve inférieure étant plus bombée que la valve supérieure, la valve inférieure étant placée au fond de l'empreinte ; et/ou
- l'unité de transport comprend en outre au moins un buvard placé au fond de l'empreinte.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre un exemple de réalisation d'une unité de transport conforme à un mode de réalisation, les coquillages ayant été omis ;
La figure 2 est une vue du dessus du support de l'unité de transport de la figure 1 ;
La figure 3 est une vue du dessus du support de la figure 2 avec des coquillages placés dans les empreintes ; et

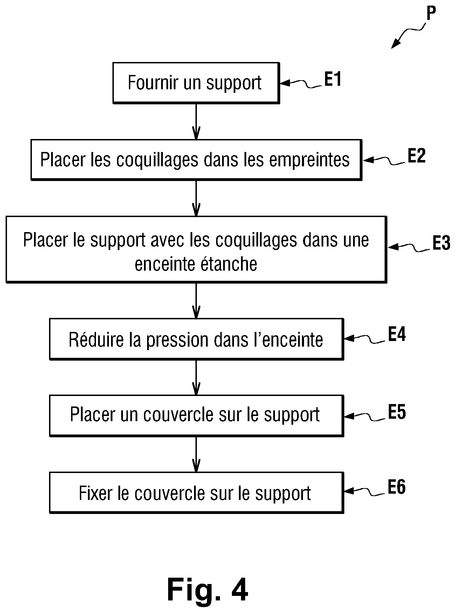

La figure 4 est un organigramme d'étapes d'un procédé de conditionnement conforme à un mode de réalisation.

Sur l'ensemble des figures, les éléments similaires portent des références identiques.

### DESCRIPTION DETAILLEE DE L'INVENTION

Le présent exposé concerne un procédé de conditionnement d'une unité de transport 1 de coquillages 2 vivants et l'unité de transport 1 correspondante. Par « coquillages 2 » ou « coquillages 2 vivants » on entend, ici et dans toute la description ci-dessous, des animaux vivants de type mollusques d'eau de mer ou d'eau douce, typiquement des mollusques bivalves ou des gastéropodes.

Les coquillages 2 vivants comprennent par exemple des coquillages 2 bivalves tels que des huîtres. Chaque coquillage 2 peut comprendre comprend une valve inférieure et une valve supérieure, la valve inférieure pouvant être plus bombée (creuse) que la valve supérieure.

On comprendra cependant que l'invention pourrait être réalisée, avec les mêmes avantages, pour en combinaison avec tout autre type de contenu consommable conditionné dans le même emballage, notamment un contenu vivant dont il convient d'assurer l'intégrité et la salubrité au cours du transport et de la mise à la vente.

Afin d'améliorer la durée de conservation des coquillages 2, il est proposé de placer les coquillages 2 dans une unité de transport 1 comprenant un support 3 et un couvercle 4 configurés de sorte à immobiliser les coquillages 2 et les empêcher ainsi de se retourner et de s'ouvrir. De plus, la pression dans l'unité de transport 1 est inférieure à la pression atmosphérique afin de renforcer l'immobilisation des coquillages 2 dans le support 3 et d'augmenter la durée de vie des coquillages 2. En effet, les coquillages 2, et notamment les mollusques bivalves, se nourrissent en filtrant l'eau. L'ouverture des coquillages 2 pendant le transport ou le stockage présente donc le risque que les coquillages 2 perdent tout ou partie de leur eau, limitant ainsi leur durée de vie et donc leur durée de conservation. A contrario, l'unité de transport 1 conforme au présent exposé permet de garantir que le coquillage 2 reste fermé, augmentant ainsi drastiquement sa durée de vie. Il a par exemple été constaté par la demanderesse que des huîtres conditionnées dans une unité de transport 1 comprenant un support 3 sur lequel est monté un couvercle 4 de manière étanche avec une pression inférieure à la pression atmosphérique pouvait être conservée pendant au moins 20 jours, voire jusqu'à 40 jours.

Pour cela, le support 3 comprend une face supérieure 5 dans laquelle sont formées une ou plusieurs empreintes 6 configurées pour loger au moins partiellement un coquillage 2 de sorte à maintenir le coquillage 2 en position par rapport au support 3. Le coquillage 2 est placé de sorte que sa valve inférieure se trouve au fond de l'empreinte 6, la valve supérieure pouvant dépasser de l'empreinte 6. Cela permet en effet de garantir que le mollusque baigne dans l'eau de la coquille et réduit les risques de fuites.

L'embouchure des empreintes 6 s'étend sensiblement dans un même plan (à 5 mm près) afin d'améliorer le blocage des coquillages 2 par le couvercle 4. La profondeur des empreintes 6 peut en revanche varier afin de tenir compte de l'épaisseur du coquillage 2 destiné à être placé dans l'empreinte 6 (lorsque des coquillages 2 différents sont placés dans l'unité de transport 1).

De préférence, l'empreinte 6 loge au moins partiellement la valve inférieure du coquillage 2. La forme et les dimensions de l'empreinte 6 sont choisies de sorte que, lorsque la face supérieure 5 du support 3 est horizontale et que le support 3 est déplacé dans un plan horizontal, le coquillage 2 placé dans l'empreinte 6 ne puisse pas se renverser.

Dans une forme de réalisation, la forme et les dimensions de l'empreinte 6 correspondent à la forme et aux dimensions de tout ou partie de la valve inférieure du coquillage 2 de sorte à épouser la forme de sa valve inférieure. Le coquillage 2 peut par exemple être monté serré dans l'empreinte 6.

En variante, l'empreinte 6 peut présenter un volume plus important que la partie de la valve inférieure qu'il reçoit et comprendre des cales configurées pour venir en appui contre la valve inférieure afin de maintenir le coquillage 2 en position.

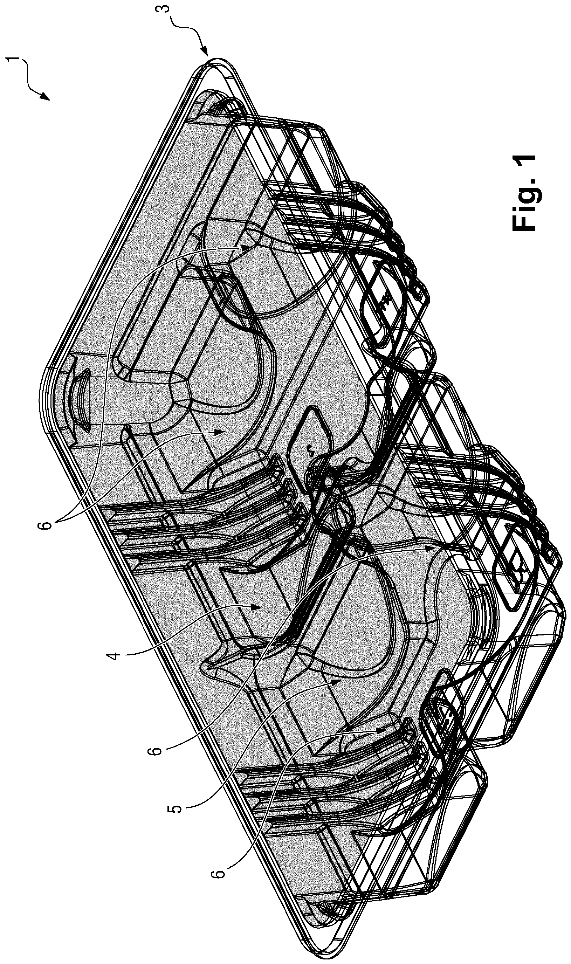

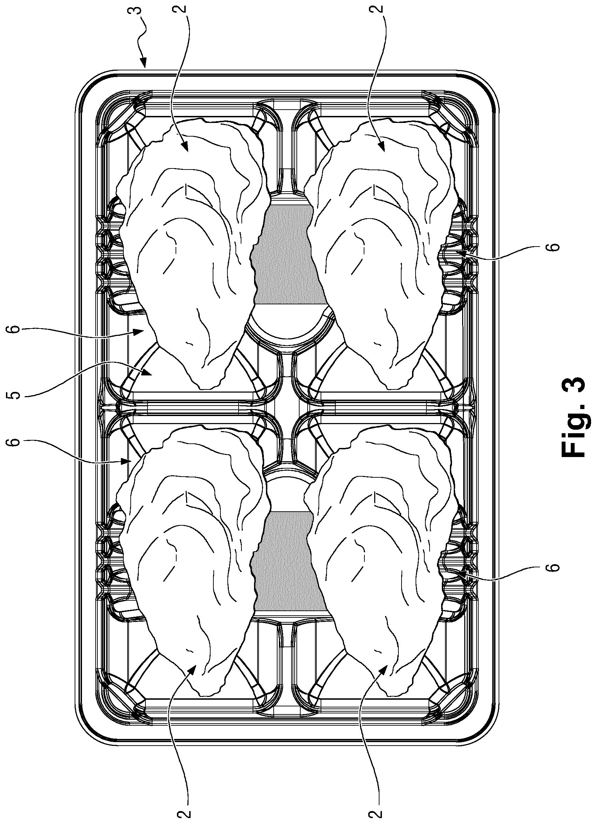

Le support 3 peut comprendre une pièce pleine dans laquelle sont creusées ou moulées les empreintes 6. Par exemple, le support 3 peut comprendre un bloc rigide plein (par exemple un bloc de plastique ou en bois) dans lequel la face supérieure 5 duquel sont creusées les empreintes 6. En variante, comme illustré sur les figures 1 à 3, le support 3 peut comprendre une caisse creuse présentant une paroi de fond dont la face supérieure 5 correspond à la face supérieure 5 du support 3 et des parois latérales qui s'étendent depuis le fond, les empreintes 6 pouvant être définies par déformation du fond (par moulage ou emboutissage) de la caisse. Cette variante de réalisation présente l'avantage d'être plus légère et de nécessiter une quantité de matière plus réduite en comparaison avec la pièce pleine. Le support 3 est en outre empilable.

Le support 3 est réalisé dans un matériau adapté pour les emballages alimentaires, typiquement les matériaux plastiques utilisés dans l'emballage des produits frais de boucherie. Le matériau constitutif de la face supérieure 5 du support 3 est en outre étanche à l'air et à l'eau afin de maintenir une pression constante dans l'unité de transport 1. Dans une forme de réalisation, le support 3 peut être réalisé dans un seul et même matériau. Par exemple, le support 3 peut être réalisé en polyéthylène téréphtalate amorphe (APET), qui est un matériau thermoplastique résistant et de faible coût, en polyéthylène téréphtalate cristallisé (PEC) ou encore en polystyrène.

Optionnellement, un buvard 7 est placé au fond de chaque empreinte 6, ou en variante sur toute la surface supérieure 5 du support 3, afin d'absorber la condensation dans l'unité de transport 1. Le ou les buvards 7 sont de préférence positionné de sorte que la valve inférieure de chaque coquillage soit en contact avec du buvard 7.

Le buvard peut par exemple comprendre un papier ayant une absorption comprise entre 3 et 7 L/m², par exemple de l'ordre de 5 L/m².

Le couvercle 4 est configuré pour être fixer de manière étanche sur le support 3 de sorte à immobiliser le ou les coquillages 2 entre le couvercle 4 et le support 3. Le couvercle 4 vient donc en contact avec la valve supérieure de sorte à maintenir le coquillage 2 en appui contre le support 3.

De préférence, le couvercle 4 est monté sur le support 3 de sorte à appliquer un effort sur le coquillage 2 afin de le maintenir fermé. Le couvercle 4 peut être transparent afin de permettre de visualiser les coquillages 2 sans ouvrir l'unité de transport 1. Le couvercle 4 est par ailleurs réalisé dans un matériau étanche à l'eau et à l'air afin de maintenir une pression constante dans l'unité de transport 1 lorsque le couvercle 4 est fixé contre le support 3.

Dans une forme de réalisation, le couvercle 4 comprend un film 4 thermoplastique déformable qui est appliqué contre la valve supérieure des coquillages 2 et tout ou partie de la face supérieure 5 du support 3 (voir figure 1). De plus, la pression dans l'unité de transport 1 étant inférieure à la pression atmosphérique, le film 4 épouse la forme des coquillages 2, assurant ainsi ses fonctions d'immobilisation des coquillages 2. La pression dans l'unité de transport 1 étant inférieure à la pression atmosphérique, le film 4 déformable vient en contact avec une grande partie de la surface de la valve supérieure des coquillages 2, voire le cas échéant une partie de la surface de la valve inférieure, et pénètre en outre partiellement dans l'empreinte 6 de part et d'autre du coquillage 2, augmentant ainsi la surface de contact entre le film 4 et le coquillage 2 et réduisant ainsi les risques de fuites et d'ouverture intempestive du coquillage 2.

Le film 4 est alors fixé sur le support 3 de manière étanche sur le support 3, par exemple le long de la périphérie du support 3 et/ou autour des empreintes 6, afin de maintenir une pression constante dans l'unité de transport 1.

Le film 4 peut comprendre tout matériau adapté capable de se déformer de manière à épouser la forme des coquillages 2 et d'assurer l'étanchéité de l'unité de transport 1. Le cas échéant, le matériau constitutif du film 4 peut en outre être soudable sur la face supérieure 5 du support 3. Par exemple, le film 4 peut être réalisé dans un matériau thermoplastique type polyéthylène, polyéthylène basse densité, polyéthylène haute densité ou polypropylène. Une épaisseur du film 4 est en outre choisie de sorte à résister aux sollicitations externes lors du transport et du stockage de l'unité de transport 1, tout en garantissant sa déformation pour épouser la forme des coquillages 2. Par exemple, le film 4 peut présenter une épaisseur comprise entre 70 µm et 250 µm. A titre d'exemple non limitatif, un film 4 tricouche polyéthylène/ éthylène alcool vinylique/polyéthylène (PE/EVOH/PE) transparent présentant une épaisseur comprise entre 80 µm et 150 µm présente une très bonne résistance à la perforation, est soudable sur des matériaux type APET et CPET (qui peuvent être utilisés pour la réalisation du support 3) et est étanche à l'air et à l'eau. Un exemple de matériau tricouche type PE/EVOH/PE est commercialisé par la société MULTIVAC sous la désignation « MULTIFRESH ST20 PT film 4 skin avec barrière Evoh ».

Avantageusement, la pression dans l'unité de transport 1 étant inférieure à la pression atmosphérique, le film 4 déformable reste au contact des coquillages 2 tant que l'étanchéité de l'unité est assurée, c'est-à-dire jusqu'à rupture du film 4 (ou le cas échéant endommagement du support 3).

La pression dans l'unité de transport 1 est inférieure à la pression atmosphérique. Avantageusement, la réduction de la pression dans l'unité de traitement par rapport à la pression atmosphérique permet :
- au couvercle 4 d'appliquer de facto un effort sur la valve supérieure du coquillage 2 assurant ainsi qu'elle reste fermée durant le transport et le stockage ;
- de renforcer le maintien du couvercle 4 en position sur le support 3 ; et
- le cas échéant, lorsque le couvercle 4 comprend un film 4 déformable, de faire épouser au film 4 la forme des coquillages 2 sans nécessiter de traitement thermique, ce qui réduit encore les risques d'ouverture des coquillages 2 et réduit le stress appliqué aux coquillages 2 lors du conditionnement.

Le gaz contenu dans l'unité de transport 1 comprend de l'air ambiant. Les coquillages 2 ne sont donc pas sous une atmosphère contrôlée mais simplement sous air ambiant, ce qui simplifie leur conditionnement et réduit les coûts associés. Par air ambiant, on comprendra ici le gaz présent naturellement sur le lieu de conditionnement de l'unité de transport 1, qui est respiré par les opérateurs et les coquillages 2 au cours du conditionnement. L'air ambiant est ainsi composé en majorité (99 %) d'azote et d'oxygène, la proportion d'oxygène pouvant notamment varier selon la position géographique du lieu de conditionnement.

Le nombre de coquillages pouvant être conditionnés dans une unité de transport 1 dépend de la taille de l'unité de transport 1 (et de l'outillage utilisé pour le conditionnement), sachant qu'il est préférable que les coquillages soient placés côte à côte, sans chevauchement ni superposition, pour garantir le maintien du couvercle 4, et en particulier du film 4, contre les coquillages 2 lors du transport et du stockage de l'unité de transport 1.

### Procédé de conditionnement P

Dans ce qui suit, un procédé de conditionnement P sera décrit dans le cas d'une unité de transport 1 comprenant plusieurs coquillages 2. Toutefois, comme précisé ci-avant, le présent exposé s'applique également lorsque l'unité de transport 1 ne comprend qu'un seul coquillage 2. Par ailleurs, un même outillage peut conditionner plusieurs unités de transport 1 simultanément.

Le procédé P peut être mis en oeuvre de manière semi-automatique ou automatique à l'aide d'un outillage qui sera décrit dans ce qui suit, à température ambiante.

Au cours d'une étape E1, un support 3 est fourni. Le support 3 peut être obtenu par moulage ou emboutissage. Optionnellement, le support 3 peut être fabriqué par l'outillage, par emboutissage et formage par exemple d'une feuille en matière plastique.

Optionnellement, un buvard 7 peut être placé au fond de chaque empreinte 6, ou en variante, contre la surface supérieure 5 du support 3.

Au cours d'une étape E2, un coquillage 2 est placé dans chaque empreinte 6 du support 3. Les coquillages 2 peuvent être de même espèce (uniquement des huîtres par exemple), de même famille (fines de clair, spéciales, etc.) et de même calibre. En variante, les coquillages 2 peuvent être différents, c'est-à-dire d'espèces (huîtres, moules, palourdes, etc.) différentes, de familles différentes et/ou de calibres différents. On notera que, dans le cas de coquillages 2 différents, la forme et les dimensions (longueur, largeur, profondeur) de chaque empreinte 6 pourront être adaptées au type de coquillage 2 reçu par chaque empreinte 6 afin de garantir la bonne tenue de chaque coquillage 2.

Les coquillages 2 peuvent être placés manuellement sur le support 3 par un opérateur ou en variante automatiquement par l'outillage.

Au cours d'une étape E3, le support 3 comprenant les coquillages 2 est placé dans une enceinte étanche. Par exemple, l'outillage comprend un réceptacle configuré pour recevoir le support 3, un capot configuré pour coopérer avec le réceptacle de sorte à former une enceinte étanche, et une pompe configurée pour aspirer de l'air présent dans l'enceinte afin de réduire la pression dans l'enceinte. Les dimensions du capot et du réceptacle peuvent par exemple être adaptés aux dimensions du support 3. Au cours de l'étape E3, le support 3 est donc posé sur le réceptacle de l'outillage, puis le capot est fermé afin de former l'enceinte étanche. L'air contenu dans l'enceinte est donc de l'air ambiant.

Au cours d'une étape E4, la pression dans l'enceinte est réduite jusqu'à atteindre une pression de conservation inférieure à la pression atmosphérique. La pression de conservation est choisie en fonction de la taille des coquillage(s) 2 et du nombre de coquillage(s) 2 contenus dans l'enceinte, et le cas échéant de la rigidité du support 3 pour éviter sa déformation sous l'effet de la pression (et donc les risques de fuites). Dans une forme de réalisation, la pression de conservation est comprise entre 100 mbar et 800 mbar, de préférence entre 300 mbar et 650 mbar. Par exemple, la pression peut être égale à 500 mbar. On notera que, lorsque les coquillages 2 comprennent des huîtres, une pression de 500 mbar garantit la survie des huîtres tout en assurant la tenue du couvercle 4 sur le support 3.

La pression peut notamment être réduite dans l'enceinte par aspiration de l'air contenu dans l'enceinte par la pompe de l'outillage.

La pression est de préférence réduite dans l'enceinte suivant une vitesse comprise entre 50mbar/s et 500 mbars/s, de préférence entre 50 mbar/s et 250 mbar/s, par exemple 200 mbar/s. Cette vitesse permet en effet de ne pas stresser les coquillages 2 et participe donc à l'amélioration de la durée de conservation des coquillages 2.

Au cours d'une étape E5, le couvercle 4 est placé sur le support 3. Le couvercle 4 est en particulier positionné de manière à venir en contact avec chaque coquillage 2.

Lorsque le couvercle 4 comprend un film plastique étanche, l'étape E5 peut être réalisée par déroulement du film 4 puis positionnement du film 4 sur le support 3 et les coquillages 2. Le film 4 est positionné sur la face supérieure 5 du support 3 de sorte à recouvrir tous les coquillages 2 en débordant sur la face supérieure 5.

Le cas échéant, les étapes E4 et E5 peuvent être réalisées simultanément.

Au cours d'une étape E6, le couvercle 4 est fixé de manière étanche sur le support 3 de sorte à immobiliser les coquillages 2 entre le couvercle 4 et le support 3. La fixation étanche du couvercle 4 sur le support 3 permet en outre de maintenir la pression constante dans l'unité de transport 1 (et égale à la pression de conservation obtenue à l'étape E4). La fixation peut être réalisée par soudure, collage et/ou fixation mécanique.

Lorsque le couvercle 4 comprend un film plastique étanche soudable, la fixation du film 4 sur le support 3 peut être réalisée par soudage. En variante, le film 4 peut être collé sur le support 3 à l'aide d'une colle adaptée.

On notera que, lorsque plusieurs unités de transport 1 sont conditionnées simultanément conformément au présent exposé, les support 3 des unités de transport 1 sont de préférence placés côte à côte sur le réceptacle de l'outillage pendant leur conditionnement (et non superposés les uns sur les autres). En variante, lorsque l'outillage comprend plusieurs réceptacles, une ou plusieurs unités de transport 1 peuvent être placées côte à côte sur chaque réceptacle.

### Exemple

Dans un exemple de réalisation, une unité de transport 1 d'huîtres comprend un support 3 sous la forme d'une caisse creuse réalisée en APET transparent (cristal) de 700 µm obtenue par emboutissage. L'épaisseur de la paroi de fond de la caisse est sensiblement constante et égale à 700 µm. Le support 3 comprend quatre empreintes 6, qui ont été obtenues par déformation de la paroi de fond de la caisse.

Chaque empreinte 6 comprend une paroi inférieure entourée de quatre faces latérales. La paroi inférieure comprend un renfoncement, réalisé dans une zone centrale de la paroi inférieure, et une zone périphérique inclinée s'étendant entre le renfoncement et la paroi latérale. Le cas échéant, le renfoncement s'étend sur toute la largeur de l'empreinte 6, la zone périphérique comportant seulement deux parties s'étendant de part et d'autre du renfoncement. La profondeur (distance dans un plan normal à la face supérieure 5 du support 3) de l'empreinte 6 est maximale dans la zone du renfoncement, puis diminue progressivement dans la zone périphérique en direction de la paroi latérale de l'empreinte 6. L'empreinte 6 est donc conformée de sorte que la partie la plus bombée de la valve inférieure de l'huître vienne en appui contre le renfoncement, le reste de la valve inférieure venant en appuis contre la zone périphérique.

Un buvard 7 est placé au fond de chaque renfoncement. Le buvard comprend une feuille de papier ayant une absorption de 5 L/m² et est collé à l'aide d'une colle thermofusible au fond du renfoncement. Un buvard de référence B256T commercialisé par la société Plastoloir a en particulier été utilisé.

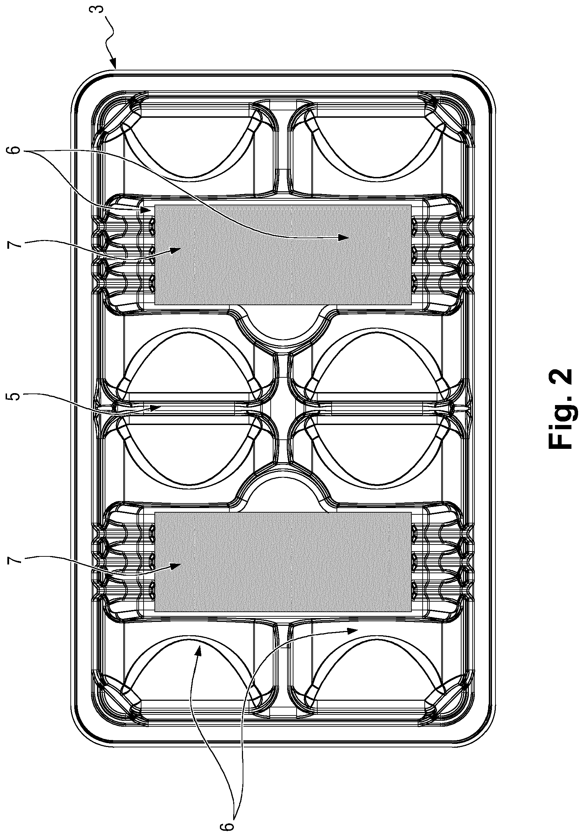

Le cas échéant, comme illustré sur la figure 2, les renfoncements de deux empreintes adjacentes peuvent s'étendre dans le prolongement l'un de l'autre et être sensiblement continues, de sorte qu'un même buvard 7 peut être utilisé pour deux empreintes 6.

Cette forme de réalisation du support 3 permet d'utiliser une même forme d'empreinte 6 pour différentes familles et/ou différents calibres d'huîtres, par exemple pour des huîtres fines de claire n°0 à 5, tout en garantissant le maintien en position des huîtres. En effet, les huîtres peuvent être posées contre le renfoncement et venir en appui contre la zone périphérique inclinée des empreintes 6 et être maintenues en position dans les empreintes 6 par le film, qui épouse leur forme grâce à la pression réduite dans l'unité de transport. Le cas échéant, la taille des empreintes 6 peut être adaptée au calibre des huîtres.

Le couvercle 4 comprend un film 4 tricouche « MULTIFRESH ST20 PT film 4 skin avec barrière Evoh » ayant une épaisseur de 150 µm, qui est fixé le long de la périphérie de la face supérieure 5 du support 3 par un cordon de soudure.

La pression dans l'unité de transport 1 est égale à 500 mbar. L'étape de réduction de la pression a été réalisée à température et air ambiants à une vitesse de 200 mbar/s.

Le gaz dans l'unité de transport 1 est de l'air ambiant.

Le Demandeur a constaté qu'une unité de transport 1 conforme au présent exemple permet de conserver les huîtres pendant une durée minimale de 20 jours.

## Revendications

1. Procédé de conditionnement (P) de coquillages (2), tels que des huîtres, comprenant les étapes suivantes :
- fournir (E1) un support (3) pour les coquillages (2), le support (3) comprenant une face supérieure dans laquelle est formé au moins une empreinte (6) configurée pour loger au moins partiellement un coquillage de sorte à maintenir le coquillage en position par rapport au support (3) ;
- placer (E2) un coquillage dans chaque empreinte (6) du support (3) ;
- placer (E3) le support (3) comprenant le ou les coquillages (2) dans une enceinte étanche ;
- réduire (E4) la pression dans l'enceinte jusqu'à atteindre une pression de conservation inférieure à la pression atmosphérique ;
- fixer (E5, E6) de manière étanche un couvercle (4) sur le support (3) de sorte à immobiliser le ou les coquillages (2) entre le couvercle (4) et le support (3) et à maintenir une pression dans l'au moins un empreinte (6) sensiblement égale à la pression de conservation.

2. Procédé de conditionnement (P) selon la revendication 1, dans lequel la pression de conservation est comprise entre 100 mbar et 800 mbar, par exemple égale à 500 mbar.

3. Procédé de conditionnement (P) selon l'une des revendications 1 et 2, dans lequel l'étape de réduction de la pression (E4) est réalisée à une vitesse comprise entre 50 mbar/s et 500 mbar/s, par exemple 200 mbar/s.

4. Procédé de conditionnement (P) selon l'une des revendication 1 à 3, dans lequel l'étape de réduction de la pression (E4) est réalisée à température ambiante.

5. Procédé de conditionnement (P) selon l'une des revendications 1 et 4, dans lequel le couvercle (4) comprend un film plastique déformable, et l'étape de fixation du couvercle (4) sur le support (3) comprend l'application du film au contact de l'au moins un coquillage.

6. Procédé de conditionnement (P) selon la revendication 5, dans lequel l'étape de fixation du couvercle (4) comprend la soudure du film sur le support (3).

7. Procédé de conditionnement (P) selon l'une des revendications 1 à 6, dans lequel le ou les coquillages (2) comprennent un coquillage bivalve asymétrique comprenant une valve inférieure et une valve supérieure, la valve inférieure étant plus bombée que la valve supérieure, l'étape de placement (E2) du coquillage dans l'empreinte (6) comprenant le placement de la valve inférieure au fond de l'empreinte (6).

8. Unité de transport (1) de coquillages (2) comprenant :
- un support (3) comprenant une face supérieure dans laquelle est formé au moins un empreinte (6), chaque empreinte (6) étant configuré pour loger au moins partiellement un coquillage de sorte à maintenir le coquillage en position par rapport au support (3) ;
- au moins un coquillage (2), chaque coquillage étant placé dans un empreinte (6) correspondant ;
- un couvercle (4) fixé de manière étanche sur le support (3), le couvercle (4) étant en contact avec l'au moins un coquillage afin de maintenir l'au moins un coquillage (2)en position par rapport au support (3) ;
une pression dans l'unité de transport (1) étant inférieure à la pression atmosphérique.

9. Unité de transport (1) selon la revendication 8, dans laquelle l'au moins un coquillage (2) comprend une huître.

10. Unité de transport (1) selon l'une des revendications 8 et 9, dans laquelle la pression dans l'unité de transport (1) est comprise entre 400 mbar et 600 mbar, par exemple égale à 500 mbar.

11. Unité de transport (1) selon l'une des revendications 8 à 10, dans laquelle le couvercle (4) comprend un film plastique déformable appliqué au contact de l'au moins un coquillage (2), le film plastique étant soudé sur le support (3).

12. Unité de transport (1) selon l'une des revendications 8 à 11, dans laquelle le ou les coquillages (2) comprennent un coquillage (2) bivalve asymétrique comprenant valve inférieure et une valve supérieure, la valve inférieure étant plus bombée que la valve supérieure, la valve inférieure étant placée au fond de l'empreinte (6).

13. Unité de transport (1) selon l'une des revendications 8 à 12, comprenant en outre au moins un buvard (7) placé au fond de l'empreinte (6).
